# FASCICULE DE BREVET EUROPEEN

(11) **EP 2 409 093 B1**
(45) Date de publication et mention de la délivrance du brevet: **20.08.2014**
(21) Numéro de dépôt: 10713480.1
(22) Date de dépôt: 16.03.2010
(51) Int. Cl.: F25B 21/00

(54) **GENERATEUR THERMIQUE MAGNETOCALORIQUE ET SON PROCEDE D'ECHANGE THERMIQUE**
MAGNETOKALORISCHER WÄRMEERZEUGER UND WÄRMEAUSTAUSCHVERFAHREN DAFÜR
MAGNETOCALORIC HEAT GENERATOR, AND HEAT EXCHANGE METHOD FOR SAME

(30) Priorité: 20.03.2009 FR 0951805
(43) Date de publication de la demande: 25.01.2012
(73) Titulaire: Cooltech Applications S.A.S., 67810 Holtzheim (FR)
(72) Inventeur: HEITZLER, Jean-Claude, F-68180 Horbourg-Wihr (FR); MULLER, Christian, F-67000 Strasbourg (FR)
(74) Mandataire: Nithardt, Roland
(86) Numéro de dépôt international: PCT/FR2010/000215
(87) Numéro de publication internationale: WO 2010/106242

(56) Documents cités:
- WO-A-2005/064245
- FR-A- 2 588 065
- JP-A- 59 180 254
- JP-A- 59 183 265
- US-A- 2 589 775
- US-A1- 2008 276 623

## Description

### Domaine technique :

La présente invention concerne un générateur thermique magnétocalorique, comprenant au moins un module thermique muni d'une extrémité froide et d'une extrémité chaude, et comportant au moins deux éléments magnétocaloriques, un arrangement magnétique destiné à soumettre lesdits éléments magnétocaloriques à un champ magnétique variable, créant alternativement, dans chacun desdits éléments magnétocaloriques une phase d'échauffement et une phase de refroidissement, un moyen d'entraînement d'un fluide caloporteur en contact thermique avec lesdits éléments magnétocaloriques et circulant alternativement en direction d'une des extrémités puis de l'autre et inversement, de manière synchronisée avec la variation du champ magnétique, et au moins un moyen d'échange de l'énergie thermique produite par ledit module thermique avec au moins un dispositif extérieur audit générateur thermique, ledit moyen d'entraînement du fluide caloporteur étant relié fluidiquement, dans un circuit fluidique fermé à volume constant, à l'extrémité froide et à l'extrémité chaude dudit module thermique par l'intermédiaire dudit moyen d'échange et ledit moyen d'échange thermique comportant deux zones d'échange distinctes l'une de l'autre, reliées en parallèle, et pourvues de moyens de contrôle du sens de circulation du fluide caloporteur, de sorte qu'elles sont traversées chacune de manière alternée par le fluide caloporteur dans un seul sens de circulation, lesdits au moins deux éléments magnétocaloriques étant en outre reliés fluidiquement par une cellule commune et soumis chacun à une phase différente d'échauffement ou de refroidissement.

Elle concerne également un procédé d'échange de l'énergie thermique produite par le module thermique tel que défini ci-dessus.

### Technique antérieure :

La technologie du froid magnétique est connue depuis plus d'une vingtaine d'années et on sait les avantages qu'elle apporte en termes d'écologie et de développement durable. On connaît également ses limites quant à sa puissance calorique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

Les échangeurs de chaleur ont pour fonction de transférer ou échanger l'énergie thermique produite par le générateur thermique et transportée par le fluide caloporteur vers un autre fluide (liquide ou gazeux) d'une ou de plusieurs applications extérieures sans les mélanger. Ces applications extérieures peuvent être l'air environnant le générateur thermique, tel qu'un dispositif thermique tubulaire intégré dans l'application extérieure, une enceinte thermique ou toute autre application dans laquelle on cherche à refroidir, climatiser, tempérer ou réchauffer un milieu.

Les générateurs thermiques magnétocaloriques connus comportent des éléments magnétocaloriques traversés alternativement de part en part par un fluide caloporteur. Dans une première configuration connue, par exemple de la publication WO-A-03/050456, ce fluide caloporteur est mis en circulation alternative entre une première cellule en communication avec la première extrémité des éléments magnétocaloriques et une seconde cellule en communication avec la seconde extrémité des éléments magnétocaloriques, et un échangeur thermique est relié fluidiquement à chacune desdites cellules. Différentes valves sont utilisées pour diriger le fluide caloporteur dans le ou les échangeurs thermiques en fonction du cycle magnétocalorique. Dans une seconde configuration connue, par exemple de la publication WO 2007/026062 A1 de la demanderesse, chaque cellule est reliée fluidiquement à un échangeur de chaleur intégré dans une boucle hydraulique.

Dans la première des configuration précitées, le fluide caloporteur se déplace de manière alternée entre les deux cellules et traverse l'échangeur thermique de l'application externe à chaque fois qu'il sort des éléments magnétocaloriques et qu'il entre dans les éléments magnétocaloriques, au cours des phases d'échauffement ou de refroidissement. Cette configuration nécessite donc un apport important d'énergie pour déplacer le fluide caloporteur en va-et-vient à travers l'ensemble des organes en mouvement et sur la totalité des tuyauteries, canalisations et raccordements reliant l'échangeur thermique de l'application externe avec l'élément magnétocalorique, l'inertie dudit fluide et des organes en mouvement devant être vaincue à chaque changement de sens de circulation. De plus, et ce, plus particulièrement en cas de phases de très courte durée, donc à vitesse de fluide élevée ou tréquence élevée, le transfer thermique entre l'échangeur thermique et le fluide caloporteur n'est pas achevé lorsque ce fluide caloporteur change de sens pour être réintroduit à travers les éléments magnétocaloriques. Le fluide caloporteur n'a donc pas la température d'entrée lui permettant de réaliser un échange thermique optimal avec les éléments magnétocaloriques.

Dans la seconde desdites configurations, une partie de l'énergie thermique du fluide caloporteur est perdue entre sa sortie des éléments magnétocaloriques et sa zone de transfert avec l'échangeur thermique.

La publication US 2,589,775 décrit un générateur magnétocalorique correspondant au préambule de la revendication 1, tandis que la publication FR 2 588 065 décrit un système de refroidissement d'un gaz réfrigérant utilisant l'effet magnétocalorique de deux régénérateurs en opposition de phase et reliés fluidiquement en série.

### Exposé de l'invention :

La présente invention vise à pallier ces inconvénients en proposant une solution aux problèmes évoqués ci-dessus. A cet effet, le générateur thermique magnétocalorique selon l'invention est réalisé de telle sorte que le transfert d'énergie thermique entre le générateur thermique et la ou les applications extérieures est optimisé en augmentant les temps d'échange entre eux.

Dans ce but, l'invention concerne un générateur thermique magnétocalorique tel que défini en revendication 1.

Elle a également pour objet un procédé d'échange de l'énergie thermique produite par un générateur thermique selon l'invention, avec au moins un dispositif extérieur par l'intermédiaire d'au moins un moyen d'échange thermique, ledit générateur thermique comportant au moins un module thermique pourvu de deux extrémités, traversé par un fluide caloporteur, et comportant au moins un élément magnétocalorique soumis à un champ magnétique variable l'assujettissant à des phases successives d'échauffement et de refroidissement, ledit fluide caloporteur circulant à travers chaque élément magnétocalorique de manière alternée et synchronisée avec la variation du champ magnétique en direction de l'une ou l'autre desdites extrémités et inversement, par l'intermédiaire d'un moyen d'entraînement du fluide caloporteur. Ce procédé est caractérisé en ce que l'on déplace le fluide caloporteur dans ledit élément magnétocalorique pas à pas, à chaque phase de fonctionnement, par un moyen d'entraînement raccordé avec des moyens d'échange thermique dans un circuit fluidique fermé à volume constant, et en ce que l'on échange l'énergie thermique produite par ledit générateur thermique à chaque phase de fonctionnement et transportée par ledit fluide caloporteur à chaque cycle magnétocalorique comportant une phase d'échauffement et une phase de refroidissement dans deux zones d'échange successives de chaque moyen d'échange thermique.

De cette manière, à chaque phase de refroidissement ou d'échauffement, le fluide caloporteur sortant d'une desdites extrémités est dirigé vers le moyen d'entraînement, à travers une première zone d'échange dudit moyen d'échange et, à chaque phase suivante d'échauffement ou de refroidissement, le fluide caloporteur dudit moyen d'entraînement est dirigé vers cette même extrémité, à travers une seconde zone d'échange dudit moyen d'échange, de telle sorte que chaque portion de fluide sortant de ladite extrémité se déplace pas à pas, à chaque changement de phase, à travers la première zone d'échange en direction du moyen d'entraînement ou à traverse la seconde zone d'échange en direction de la même extrémités, sans jamais se mélanger, ni se déplacer selon des sens opposés dans la même partie de circuit ou tuyauterie.

L'entrée de la première zone d'échange et la sortie de la seconde zone d'échange desdits moyens d'échange thermique sont reliées fluidiquement à l'une des extrémités correspondante dudit module thermique et la sortie de la première zone d'échange et l'entrée de la seconde zone d'échange sont reliées fluidiquement entre elles et audit moyen d'entraînement.

Dans le mode préféré de réalisation, l'actionneur central et les actionneurs d'extrémité peuvent comporter des pistons commandés par un même dispositif de manoeuvre.

### Description sommaire des dessins :

La présente invention et ses avantages apparaîtront mieux dans la description suivante d'un mode de réalisation donné à titre d'exemple non limitatif, en référence aux dessins annexés, dans lesquels:
- les figures 1A à 1D sont des vues schématiques d'un générateur thermique non couvert par l'objet de la revendication 1, et
- les figures 2A et 2B sont des vues similaires d'un générateur thermique selon un mode de réalisation suivant l'invention, couvert par l'objet de la revendication 1.

### Illustrations de l'invention:

Dans les exemples de réalisation illustrés, les pièces ou parties identiques portent les mêmes références numériques.

Les figures représentent schématiquement un générateur thermique 1, 10, seul le générateur thermique 10 représentant un mode de réalisation de l'invention. Ce générateur thermique 1, 10 comporte un module thermique 2, 20 comprenant un élément magnétocalorique 5. Il peut comporter bien entendu plus de un module thermique 2, 20 et chaque module peut comporter plus de un élément magnétocalorique 5.

Chaque élément magnétocalorique 5 peut être constitué par un ou plusieurs matériaux magnétocaloriques aptes à être traversés par un fluide caloporteur. A cet effet, lesdits matériaux magnétocaloriques peuvent être poreux de sorte que leurs pores forment des passages de fluide débouchant. Ils peuvent également se présenter sous la forme d'un bloc plein dans lequel des minis ou micro-canaux sont usinés ou encore être constitués par un assemblage de plaques, éventuellement rainurées, superposées et entre lesquelles le fluide caloporteur peut s'écouler. Ils peuvent aussi se présenter sous la forme de poudre ou de particules de sorte que les interstices forment des passages de fluide. Toute autre forme de réalisation permettant au fluide caloporteur d'échanger thermiquement avec chaque élément magnétocalorique 5 peut, bien entendu, convenir. Une configuration particulière peut ainsi comporter un élément magnétocalorique sous forme d'une lame qui n'est pas traversée par le fluide caloporteur mais qui est en contact thermique avec ledit fluide caloporteur circulant, par exemple, sur les surfaces supérieure et inférieure de cette lame dans deux sens opposés, pour déboucher à chaque fois au niveau d'une des extrémités de ladite lame formant les extrémités du module thermique comportant cette lame.

Le module thermique 2, 20 est soumis à un champ magnétique variable par l'intemiédiaire d'un arrangement magnétique 25 pouvant être constitué par un assemblage d'aimants permanents en mouvement relatif par rapport à chaque élément magnétocalorique 5, comme représenté dans l'ensemble des figures annexées, ou encore par un électroaimant alimenté séquentiellement ou par tout autre moyen analogue susceptible de créer une variation de champ magnétique.

L'élément magnétocalorique 5 comporte deux extrémités, une première extrémité 3 par exemple froide, et une seconde extrémité 4 par exemple chaude, confondues avec les extrémités du module thermique 2, 20. Un fluide caloporteur est mis en circulation à travers cet élément magnétocalorique 5 en direction de l'une ou l'autre des extrémités 3 et 4 et en relation avec la variation dudit champ magnétique de manière à créer puis à maintenir un gradient de température entre les deux extrémités 3 et 4 de cet élément magnétocalorique 5.

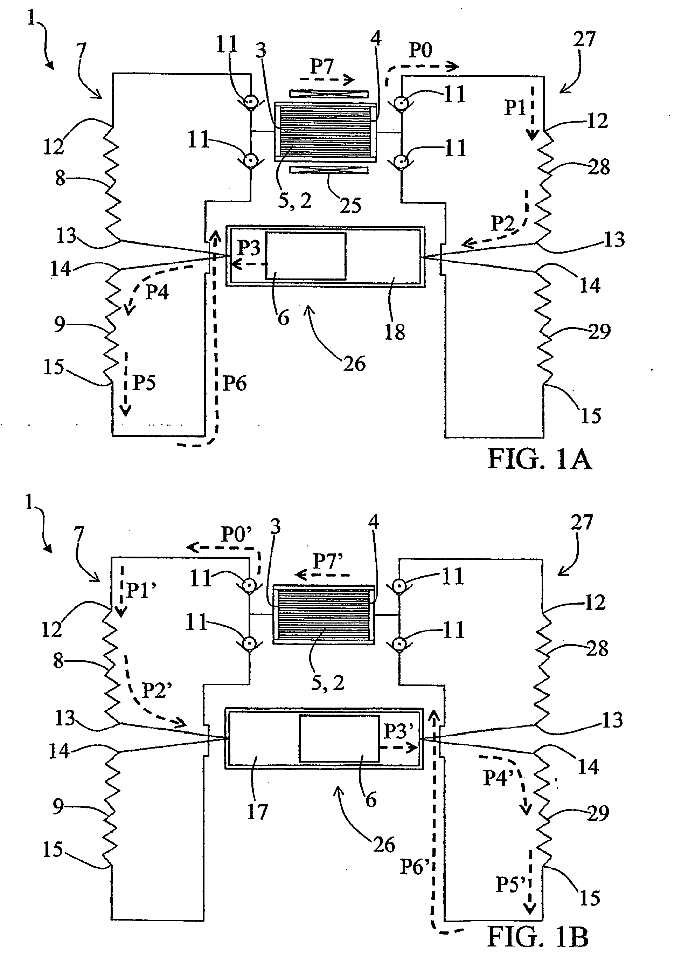

En référence aux figures 1A à 1D, le fluide caloporteur est mis en circulation dans l'élément magnétocalorique 5 selon un mouvement de va-et-vient imposé par le déplacement d'un piston 6 d'un vérin à double effet formant le moyen d'entraînement 26 du fluide caloporteur. Bien entendu, tout autre moyen apte à déplacer le fluide caloporteur peut être utilisé, telle qu'une membrane, par exemple. Le déplacement du piston 6 ou similaire est commandé par un dispositif de manoeuvre non représenté et pouvant être réalisé par une came, un dispositif magnétique, un moteur linéaire ou tout autre moyen équivalent apte à déplacer lesdits pistons selon un mouvement de va-et-vient. Ce piston 6 sépare le volume de la chemise en deux chambres 17 et 18 isolées l'une de l'autre respectivement reliées fluidiquement aux extrémités 3 et 4 du module thermique 2.

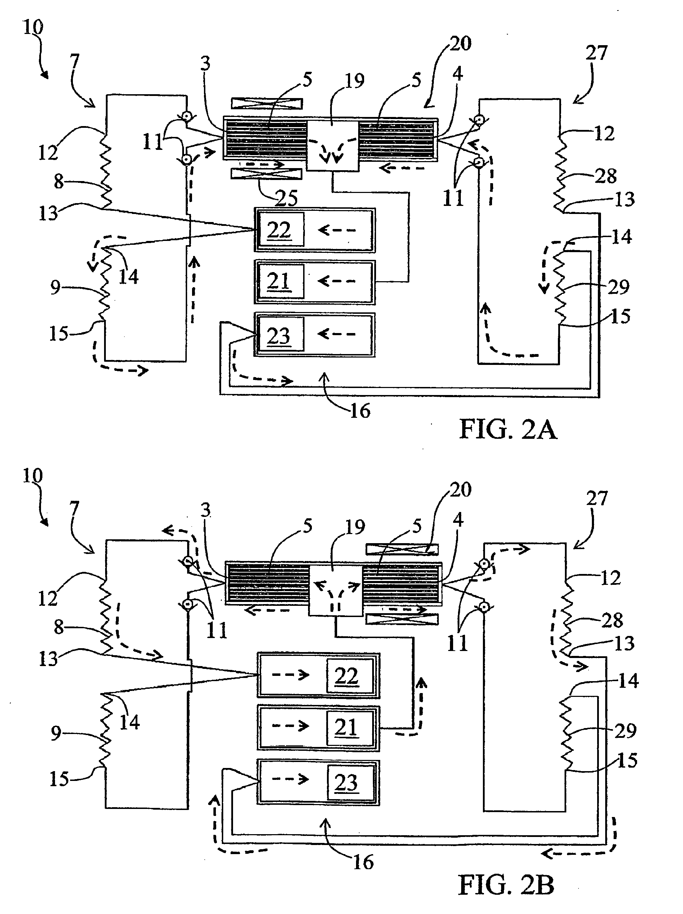

Le circuit fluidique dans lequel circule le fluide caloporteur est fermé et à volume constant. Dans le mode de réalisation suivant l'invention illustré dans les figures 2A et 2B, le moyen dentraînement 16 du fluide caloporteur comporte trois pistons 21, 22 et 23 qui seront décrits plus loin.

Dans les deux générateurs thermiques représentés, le générateur thermique 1, 10 est destiné à échanger efficacement de l'énergie thermique avec deux dispositifs extérieurs et présente à cet effet deux moyens d'échange thermique 1, 27 respectivement reliés aux extrémités 3, 4 du module thermique 2, 20 en série avec le moyen d'entraînement 26. Chaque moyen d'échange thermique 7, 27 est traversé par le fluide caloporteur, est relié thermiquement à une application ou à un dispositif extérieur et relie fluidiquement le moyen d'entraînement 26 aux deux extrémités 3, 4 du module thermique 2, 20.

Bien que dans les exemples décrits, les générateurs thermiques 1, 10 comportent deux moyens d'échange thermique 7, 27 identiques, l'invention s'étend également aux générateurs thermiques ne comportant qu'un seul moyen d'échange thermique 7, 27 relié à l'une extrémités 3 ou 4, ou éventuellement des moyens d'échange thermique différents reliés aux extrémités 3 et 4 du module thermique 2, 20.

Les moyens d'échange thermique 7 et 27 comportent deux zones d'échange 8 et 9, respectivement 28 et 29, traversées alternativement par le fluide caloporteur. Le fait de comporter plusieurs zones d'échange 8 et 9 ou 28 et 29 permet d'augmenter la capacité d'échange thermique entre le générateur thermique 1, 10 et le dispositif extérieur relié thermiquement audit moyen d'échange 7, 27.

En outre, le fait de relier fluidiquement le moyen d'entraînement 26, 16 au module thermique 2, 20 par l'intermédiaire des moyens d'échange thermique 7, 27 permet de s'affranchir de moyens d'entraînement additionnels pour assurer la fonction de déplacement du fluide caloporteur à la fois dans le module thermique 2, 20 et dans les moyens d'échange thermique 7, 27. Cette configuration permet d'obtenir une réduction de l'énergie consommée, un gain de performance (COP) et une réduction de l'encombrement du générateur thermique 1, 10.

Dans les deux générateurs thermiques 1, 10 représentés, les deux zones d'échange 8, 9 et 28, 29 des moyens d'échange thermique 7 et 27 sont disposées en parallèle ou en dérivation dans le circuit fluidique reliant le moyen d'entraînement 26, 16 aux extrémités 3, 4 du module thermique 2, 20 de sorte qu'elles sont toujours traversées par le fluide caloporteur dans un seul sens de circulation. Plus particulièrement, le fluide caloporteur circule en direction de la première zone d'échange 8, 28 lorsqu'il sort d'une des extrémités 3, 4 du module thermique 2, 20 puis circule, en retour, à la phase suivante, en direction de la seconde zone d'échange 9, 29 lorsqu'il entre dans l'une des extrémités 3, 4 du module thermique 2, 20. Pour ce faire, des moyens de contrôle 11 du sens de circulation du fluide caloporteur, tels que des clapets anti-retour, par exemple, sont montés dans ledit circuit fluidique. Les extrémités 3 et 4 du module thermique 2, 20 sont reliées chacune à l'entrée 12 de la première zone d'échange 8, 28 et à la sortie 15 de la seconde zone d'échange 9, 29 du moyen d'échange thermique 7, 27 correspondant. La sortie 13 de la première zone d'échange 8, 28 et l'entrée 14 de la seconde zone d'échange 9, 29 sont reliées fluidiquement entre elles et aux chambres 17, 18 du moyen d'entraînement 26, 16.

Les figures 1A à 1D représentent le déplacement du fluide caloporteur pas à pas, par portion P0 à P7 et P0' à P7', dans le générateur thermique 1 à travers le circuit fluidique au cours de quatre phases successives. Par phase, il faut comprendre phase d'échauffement ou de refroidissement, un cycle magnétique correspondant à une phase d'échauffement suivie d'une phase de refroidissement. Le matériau magnétocalorique 5 représenté dans les figures annexées s'échauffe lors qu'il est soumis à un champ magnétique et se refroidit lorsqu'il est retiré du champ magnétique ou soumis à un champ très faible.

La phase représentée à la figure 1A est une phase d'échauffement, l'arrangement magnétique 25 soumettant le matériau magnétocalorique 5 à un champ magnétique. Au cours de cette phase, le piston 6 se déplace vers la gauche pour déplacer le fluide caloporteur dans le matériau magnétocalorique 5 (portion de fluide P6) de l'extrémité 3 froide située à gauche sur la figure 1A vers l'extrémité 4 chaude située à droite sur la figure 1A. Le fluide caloporteur sortant de la chambre 17 du piston 6 (portion de fluide P3) circule en direction de la seconde zone d'échange 9 du moyen d'échange thermique 7 jusqu'à l'extrémité 3 froide du module thermique 2 (portions de fluide P4 puis P5). Ce sens de circulation est imposé par les clapets anti-retour 11 disposés dans le circuit fluidique fermé. Le fluide caloporteur traverse le matériau magnétocalorique 5 (portion P6) et est ensuite dirigé par les clapets anti-retour 11 vers la première zone d'échange 28 du moyen d'échange thermique 27, en direction de la chambre 18 du piston 6 (portions de fluide P7, P0, P1 puis P2). Le fluide caloporteur poursuit sa course et remplit la chambre 18 du moyen d'entraînement 26.

Deux clapets anti-retour sont disposés en opposition dans le circuit fluidique entre chaque extrémité 3 ou 4 du module thermique 2, 20 et la chambre correspondante 17 ou 18 du moyen d'entraînement 26, 16. Ainsi dans la première zone d'échange 8, 28, le fluide caloporteur ne peut circuler que de ladite extrémité 3 ou 4 vers la chambre correspondante 17 ou 18 (= circuit aller du fluide), et dans la seconde zone d'échange 9, 29, le fluide caloporteur ne peut circuler que de ladite chambre 17 ou 18 à l'extrémité correspondante 3 ou 4 (= circuit retour du fluide).

On constate qu'au cours de la phase d'échauffement représentée à la figure 1A, le fluide caloporteur ne se déplace que dans la seconde zone d'échange 9 du moyen d'échange thermique 7 situé du coté froid et dans la première zone d'échange 28 du moyen d'échange 27 situé du côté chaud.

Au cours de la phase suivante qui consiste à une phase de refroidissement en référence à la figure 1B, le fluide circule uniquement dans les deux autres zones d'échange, à savoir la première zone d'échange 8 du moyen d'échange 7 situé du coté froid et la seconde zone d'échange 29 du moyen d'échange 27 situé du côté chaud. Le piston 6 se déplace vers la droite pour déplacer le fluide caloporteur dans le matériau magnétocalorique 5 (portion de fluide P6') de l'extrémité 4 chaude vers l'extrémité 3 froide. Le fluide caloporteur sortant de la chambre 18 du piston 6 (portion de fluide P3') circule en direction de la seconde zone d'échange 29 du moyen d'échange thermique 27 jusqu'à l'extrémité 4 chaude du module thermique 2 (portions de fluide P4' puis P5'). Ce sens de circulation est imposé par les clapets anti-retour 11 disposés dans le circuit fluidique fermé. Le fluide caloporteur traverse le matériau magnétocalorique 5 (portion P6') et est ensuite dirigé par les clapets anti-retour 11 vers la première zone d'échange 8 du moyen d'échange thermique 7, en direction de la chambre 17 du piston 6 (portions de fluide P7', P0', P1' puis P2'). Le fluide caloporteur poursuit sa course et remplit la chambre 17 du moyen d'entraînement 26.

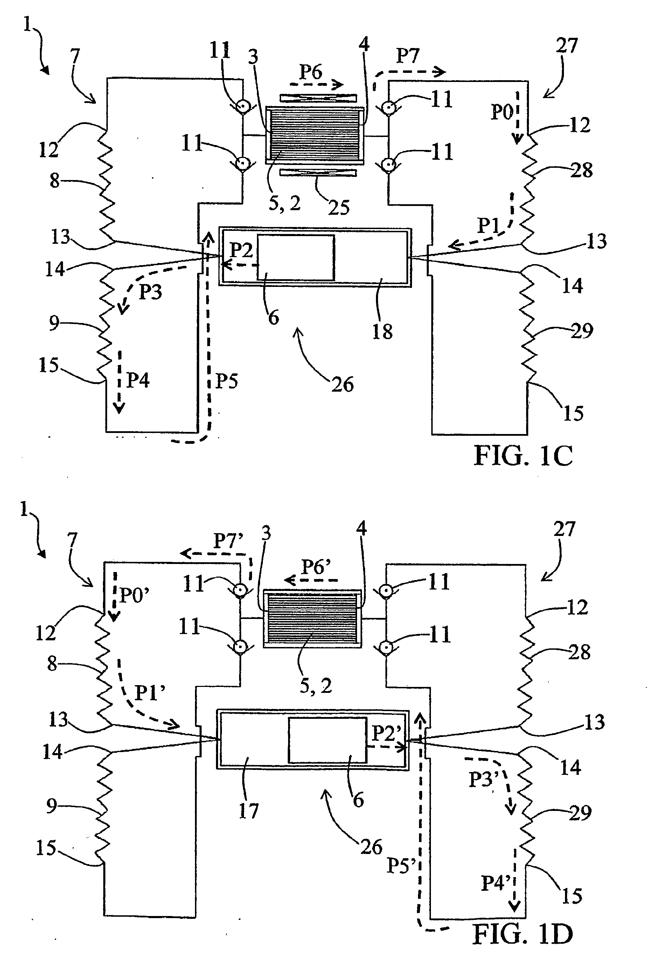

Au cours de la phase suivante d'échauffement, représentée à la figure 1C, le fluide circule de la même manière que cela a été décrit en référence à la figure 1A, de telle sorte que la portion de fluide P7 est remplacée par la portion de fluide P6, la portion de fluide P6 est remplacée par la portion de fluide P5, et ainsi de suite.

De la même manière, lorsque au cours de la phase suivante de refroidissement illustrée à la figure 1D, le fluide est déplacé de la même manière que celle décrite en référence à la figure 1B, de telle sorte que la portion de fluide P7' est remplacée par la portion de fluide P6', la portion de fluide P6' est remplacée par la portion de fluide P5', et ainsi de suite.

A chaque phase thermique, le fluide caloporteur circule à travers une zone d'échange différente des moyens d'échange thermique 7, 27. Le fluide sortant d'une des extrémités 3 ou 4 du module thermique 2, 20 retourne dans cette même extrémité 3 ou 4 uniquement après avoir traversé les deux zones d'échange 8 et 9, ou 28 et 29 du moyen d'échange thermique 7, 27 correspondant. Ainsi, un maximum d'énergie a pu être échangé entre le générateur thermique 1 et l'application extérieure. En outre, le fluide caloporteur qui rentre à nouveau dans le module thermique 2 a réalisé un important échange thermique avec l'application extérieure par l'intermédiaire des moyens d'échange thermique 7 et 17, et se retrouve avec une température appropriée pour traverser à nouveau le matériau magnétocalorique 5 lors de la phase suivante.

En outre, cet échange thermique est favorisé par le fait que le fluide caloporteur circule pas à pas et que chaque portion de fluide n'est déplacée qu'une phase sur deux, de sorte que le temps d'échange est augmenté, ce qui améliore l'échange thermique avec l'application extérieure au niveau des zones d'échange 8, 9, 28, 29. En effet, la puissance totale échangée est égale à la puissance échangée pendant l'intervalle de temps actif (fluide qui se déplace) additionnée à la puissance échangée pendant l'intervalle de temps statique (fluide qui ne se déplace pas).

Dans l'exemple illustré aux figures 1A à 1D, la sortie 13 de la première zone d'échange 8, 28 et l'entrée 14 de la seconde zone d'échange 9, 29 sont reliées directement à la chambre 17, 18 correspondante du moyen d'entraînement 26. Il peut également être prévu de les relier fluidiquement entre elles en un point d'embranchement, lui-même relié fluidiquement à la chambre 17 ou 18 correspondante dudit moyen d'entraînement 26. Dans une telle configuration, la distance, et plus particulièrement le volume entre ce point d'embranchement et la chambre 17, 18 concernée doit être le plus faible possible afin d'éviter l'apparition de zones mortes dans lesquelles le fluide caloporteur se déplace de manière alternée, sans sortir desdites zones mortes.

Le générateur thermique 10 représenté dans les figures 2A et 2B consiste en un mode de réalisation suivant l'invention telle que définie dans les revendications dans lequel le module thermique 20 comporte deux éléments magnétocaloriques 5 qui sont constamment soumis à une phase magnétocalorique différente. Ainsi, lorsque l'un des éléments magnétiques 5 est soumis à un champ magnétique et s'échauffe, l'autre est en dehors du champ magnétique ou soumis à un champ très faible et se refroidit, et inversement. En outre, le fluide caloporteur circule dans les deux éléments magnétocaloriques 5 en sens opposés, à savoir en direction de l'une ou l'autre des extrémités 3, 4 du module thermique 20, et inversement.

Les moyens d'échange thermique 7 et 27 reliés au module thermique 20 de ce générateur thermique 10 sont les mêmes que ceux du générateur thermique 1 représenté dans les figures 1A à 1D. Le moyen d'entraînement 16 du fluide caloporteur est toutefois de configuration différente. En effet, il comporte un actionneur central 21 réalisé sous la forme d'un piston relié fluidiquement à la cellule commune 19 aux deux éléments magnétocaloriques 5 et déplaçant le fluide caloporteur à travers cette cellule commune 19, en direction des éléments magnétocaloriques 5 ou dans le sens opposé. Il comporte également deux actionneurs d'extrémité 22 et 23 également réalisés sous la forme de pistons reliés fluidiquement chacun à l'une des extrémités 3, respectivement 4 du module thermique 20. Le déplacement de l'ensemble de ces pistons est commandé par un unique dispositif de manoeuvre non représenté et pouvant être réalisé par une came, un dispositif magnétique, un moteur linéaire ou tout autre moyen équivalent apte à déplacer lesdits pistons selon un mouvement de va-et-vient.

Ainsi, dans cette configuration, chaque moyen d'échange thermique 7, 27 est relié à l'un des actionneurs d'extrémité 22 et 23. Le fonctionnement du générateur thermique 10 est sensiblement identique en ce qui concerne la mise en circulation du fluide caloporteur une phase sur deux dans chacune des zones d'échange 8 et 9 ou 28 et 29 des moyens d'échange thermique 7 et 27.

En référence à la figure 2A représentant une première phase, l'élément magnétocalorique 5 situé à gauche sur la figure subit une phase d'échauffement et l'élément magnétocalorique 5 situé à droite sur la figure subit une phase de refroidissement. L'ensemble des pistons 21, 22, 23 est déplacé vers la gauche et le fluide caloporteur circule, d'une part, depuis la chambre du piston 22 en direction de la seconde zone d'échange 9 du moyen d'échange thermique 7 relié à l'extrémité 3 (froide) du module thermique 20 et de ladite extrémité 3, pour traverser l'élément magnétocalorique 5 situé à droite, côté froid, puis la cellule commune 19 jusqu'à la chambre du piston 21 formant l'actionneur central et, d'autre part, le fluide caloporteur circule depuis la chambre du piston 23 en direction de la seconde zone d'échange 29 du moyen d'échange thermique 27 relié à l'extrémité 4 (chaude) du module thermique 20 et de ladite extrémité 4, pour traverser l'élément magnétocalorique 5 situé à gauche, côté chaud, puis la cellule commune 19 jusqu'à la chambre du piston 21 formant l'actionneur central. La chemise du piston 21 doit par conséquent avoir un volume double des chemises des autres pistons 22 et 23.

Comme dans l'exemple précédent, le sens de circulation du fluide caloporteur est imposé par des clapets anti-retour 11 ou similaires.

Dans ce générateur thermique 10, l'entrée 12 de la première zone d'échange 8, 28 et la sortie 15 de la seconde zone d'échange 9, 29 des moyens d'échange thermique 7, 27 sont directement reliées fluidiquement à l'extrémité 3, 4 correspondante. Or, dans le générateur thermique 1 des figures 1A à 1D, l'entrée 12 de la première zone d'échange 8, 28 et la sortie 15 de la seconde zone d'échange 9, 29 sont reliées entre elles en un point d'embranchement lui-même relié à l'extrémité 3, 4 correspondante. L'un ou l'autre des deux types de connexions raccordement sont réalisables dans chacun des deux générateurs thermiques 1 et 10. Toutefois, le raccordement direct sans point d'embranchement est avantageux car il permet d'éviter l'apparition de zones mortes dans lesquelles le fluide caloporteur se déplace de manière alternée, sans sortir desdites zones mortes.

Dans la phase de la figure 2A, on constate que le fluide caloporteur ne se déplace que dans les portions de circuit comportant les secondes zones d'échange 8 et 28 des moyens d'échange 7 et 27.

Au cours de la phase suivante, représentée dans la figure 2B, l'élément magnétocalorique 5 situé côté froid n'est plus soumis au champ magnétique ou soumis à un champ très faible, tandis que l'autre élément magnétocalorique 5 est soumis à un champ magnétique, et les pistons 21, 22 et 23 se déplacent vers la droite. Le fluide caloporteur se déplace ainsi depuis la chambre du piston central 21 vers la cellule commune 19 puis une part de ce fluide caloporteur traverse l'élément magnétocalorique 5 situé côté froid (à gauche) puis la première zone d'échange 8 du moyen d'échange thermique 7 situé du même côté pour remplir la chambre du piston 22, tandis que l'autre part de ce fluide caloporteur traverse l'élément magnétocalorique 5 situé côté chaud (à droite) puis la première zone d'échange 28 du moyen d'échange thermique 27 situé du même côté pour remplir la chambre du piston 23.

Dans cette phase également le fluide caloporteur ne se déplace qu'à travers deux zones d'échange 8 et 28, à savoir celles qui n'ont pas été traversées à la phase précédente.

Dans cette configuration également, le fluide se déplace pas à pas, une phase sur deux, à travers chaque zone d'échange 8, 28, 9, 29. Ainsi, les temps d'échange sont augmentés sans que cela n'ait d'incidence sur les phases d'échauffement et de refroidissement. Cela permet d'échanger mieux et plus longtemps l'énergie thermique produite par le générateur thermique 1, 10 avec chaque application ou dispositif extérieur.

En outre, et cela vaut également pour les deux générateurs thermiques 1, 10 illustrés, chaque portion de fluide caloporteur se déplace constamment dans le même sens, de sorte qu'il n'y a aucune inertie à vaincre qui serait due à un changement de sens de circulation.

A cet effet, les premières et secondes zones d'échange 8, 28 et 9, 29 peuvent être disposées dans le dispositif extérieur ou directement en contact lui. Elles peuvent, à titre d'exemple, être réalisées sous la forme de conduits en une matière thermiquement conductrice telle que l'aluminium ou le cuivre, par exemple et le dispositif extérieur peut être un milieu liquide (bain à réchauffer, refroidir ou tempérer, par exemple) ou gazeux (chambre ou volume à réchauffer, refroidir ou tempérer, par exemple).

Dans le mode de réalisation décrit, les moyens de contrôle du sens de circulation du fluide caloporteur sont des clapets anti-retour. Ils peuvent toutefois être remplacés par tout moyen équivalent assurant la même fonction, tel que des valves hydrauliques commandées électriquement ou par un différentiel de pression, par exemple.

Enfin, l'invention n'est pas limitée à l'intégration de seulement un ou deux éléments magnétocaloriques 5 dans un module thermique 2, 20, ni à un générateur thermique 1, 10 comportant un seul module thermique 2, 20.

Le générateur thermique 10 décrit met en oeuvre le procédé d'échange de l'énergie thermique selon l'invention. Les moyens d'échange 7, 27 permettent d'échanger l'énergie produite par le générateur avec des dispositifs extérieurs. Pour ce faire, le fluide est déplacé de manière alternée pas à pas dans deux zones d'échange 9, 28 puis 8, 29 de deux moyens d'échange thermique 7, 27, en fonction des phases magnétocaloriques. Le déplacement du fluide dans chaque zone d'échange 9, 28, 8, 29 est unidirectionnel et réalisé par un dispositif d'entraînement raccordé aux deux moyens d'échange thermique 7, 27.

### Possibilités d'application industrielle :

Il ressort clairement de cette description que l'invention permet d'atteindre les buts fixés, à savoir proposer un générateur thermique 10 de configuration simple et muni d'au moins un moyen d'échange thermique 7, 27 susceptible de transférer à une application extérieure un maximum d'énergie thermique produite par ledit générateur thermique 10, ainsi qu'un procédé permettant de rendre plus efficaces les échanges thermiques entre un module thermique 2, 20 et l'extérieur (l'extérieur étant constitué par un dispositif ou une application extérieur).

Le procédé et le générateur thermique 10 selon l'invention peuvent trouver une application aussi bien industrielle que domestique dans le domaine du chauffage, de la climatisation, du tempérage, refroidissement ou autres, ce, à des coûts compétitifs et dans un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique (10) magnétocalorique, comprenant au moins un module thermique (20) muni d'une extrémité froide (3) et d'une extrémité chaude (4), et comportant au moins deux éléments magnétocaloriques (5), un arrangement magnétique destiné à soumettre lesdits éléments magnétocaloriques (5) à un champ magnétique variable, créant alternativement, dans chacun desdits éléments magnétocaloriques (5) une phase d'échauffement et une phase de refroidissement, un moyen d'entraînement (16) d'un fluide caloporteur en contact thermique avec lesdits éléments magnétocaloriques (5) et circulant alternativement en direction d'une (3) des extrémités puis de l'autre (4) et inversement, de manière synchronisée avec la variation du champ magnétique, et au moins un moyen d'échange thermique (7, 27) pour transférer l'énergie thermique produite par ledit module thermique (20) à au moins un dispositif extérieur audit générateur thermique (10), ledit moyen d'entraînement (16) du fluide caloporteur étant relié fluidiquement, dans un circuit fluidique fermé à volume constant, à l'extrémité froide (3) et à l'extrémité chaude (4) dudit module thermique (20) par l'intermédiaire dudit moyen d'échange (7, 27) et ledit moyen d'échange thermique (7, 27) comporte deux zones d'échange (8 et 9, 28 et 29) distinctes l'une de l'autre, reliées en parallèle, et pourvues de moyens de contrôle (11) du sens de circulation du fluide caloporteur, de sorte qu'elles sont traversées chacune de manière alternée par le fluide caloporteur dans un seul sens de circulation, lesdits au moins deux éléments magnétocaloriques (5) étant en outre reliés fluidiquement par une cellule commune (19) et soumis chacun à une phase différente d'échauffement ou de refroidissement, générateur thermique dans lequel l'entrée (12) de la première zone d'échange (8, 28) et la sortie (15) de la seconde zone d'échange (9, 29) dudit au moins un moyen d'échange thermique (7, 27) sont reliées fluidiquement à l'une des extrémités (3, 4) correspondante dudit module thermique (20) et la sortie (13) de la première zone d'échange (8, 28) et l'entrée (14) de la seconde zone d'échange (9, 29) sont reliées fluidiquement audit moyen d'entraînement (16), lesdits au moins deux éléments magnétocaloriques étant traversés par le fluide caloporteur dans des sens opposés, générateur thermique **caractérisé en ce que** ledit moyen d'entraînement (16) comporte :
- un actionneur central (21) relié fluidiquement à ladite cellule commune (19) de manière à déplacer le fluide caloporteur à travers cette cellule commune en direction des éléments magnétocaloriques ou dans le sens opposé, et
- deux actionneurs d'extrémité (22 et 23) reliés fluidiquement chacun à l'une des extrémités (3 ou 4) dudit module thermique (20) par l'intermédiaire dudit au moins un moyen d'échange thermique (7, 27),
et **en ce que** ledit actionneur central (21) est agencé pour déplacer un volume de fluide caloporteur double desdits actionneurs d'extrémité (22 et 23).

2. Générateur thermique, selon la revendication 1, **caractérisé en ce que** ledit actionneur central (21) et lesdits actionneurs d'extrémité (22, 23) comportent des pistons commandés par un même dispositif de manoeuvre.

3. Procédé d'échange de l'énergie thermique produite par un générateur thermique (10) selon l'une quelconque des revendications précédentes, avec au moins un dispositif extérieur par l'intermédiaire d'au moins un moyen d'échange thermique (7, 27), ledit générateur thermique (10) comportant au moins module thermique (20) pourvu de deux extrémités (3, 4), traversé par un fluide caloporteur, et comportant au moins un élément magnétocalorique (5) soumis à un champ magnétique variable l'assujettissant à des phases successives d'échauffement et de refroidissement, ledit fluide caloporteur circulant à travers chaque élément magnétocalorique (5) de manière alternée et synchronisée avec la variation du champ magnétique en direction de l'une ou l'autre desdites extrémités (3, 4), et inversement, par l'intermédiaire d'un moyen d'entraînement (16) du fluide caloporteur, procédé **caractérisé en ce que** l'on déplace le fluide caloporteur dans ledit élément magnétocalorique (5) pas à pas, à chaque phase de fonctionnement, par ledit moyen d'entraînement (16) raccordé audit au moins un moyen d'échange thermique (7, 27) dans un circuit fluidique fermé à volume constant, et **en ce que** l'on échange l'énergie thermique produite par ledit générateur thermique à chaque phase de fonctionnement et transportée par ledit fluide caloporteur à chaque cycle magnétocalorique comportant une phase d'échauffement et une phase de refroidissement dans deux zones d'échange (8, 9 et 28, 29) successives dudit au moins un moyen d'échange thermique (7, 27).

## Patentansprüche

1. Magnetokalorischer Wärmeerzeuger (10) bestehend aus zumindest einem Wärmemodul (20) mit einem kalten Ende (3) und einem warmen Ende (4), und mit zumindest zwei magnetokalorischen Elementen (5), einer magnetischen Anordnung, die ausgelegt ist, um die besagten magnetokalorischen Elemente (5) einem variablen Magnetfeld auszusetzen, das in jedem der besagten magnetokalorischen Elemente (5) abwechselnd einen Heiz-Zyklus und einen Kühl-Zyklus erzeugt, einer Antriebseinrichtung (16), um ein Wärmeübertragungsfluid in Bewegung zu setzen, das mit den besagten magnetokalorischen Elemente (5) in thermischem Kontakt steht und abwechselnd synchron mit der Variation des Magnetfelds in Richtung eines der Enden (3) und dann des anderen (4) fließt und umgekehrt, und zumindest einem Wärmeaustausch-Mittel (7, 27) um die vom besagten Wärmemodul (20) erzeugte Wärmeenergie auf zumindest eine außerhalb des Wärmeerzeugers (10) angeordnete Vorrichtung zu übertragen, wobei die besagte Antriebseinrichtung (16) des Wärmeübertragungsfluids in einem geschlossenen Fluidkreis mit konstantem Volumen über das besagte Wärmeaustausch-Mittel (7, 27) mit dem kalten Ende (3) und dem warmen Ende (4) des besagten Wärmemoduls (20) in Fluidverbindung steht und das besagte Wärmeaustausch-Mittel (7, 27) zwei voneinander getrennte, parallel geschaltete und mit Kontrollmitteln (11) für die Fließrichtung des Wärmeübertragungsfluids versehene Austausch-Zonen (8 und 9, 28 und 29) beträgt, so dass jede abwechselnd in eine einzige Fließrichtung von dem Wärmeübertragungsfluid durchflossen wird, wobei die zumindest zwei magnetokalorischen Elemente (5) außerdem über eine gemeinsame Zelle (19) in Fluidverbindung stehen und jedes einer verschiedenen Erwärmungs- oder Abkühlungs-Phase unterzogen wird, Wärmegenerator in dem der Einlass (12) der ersten Austausch-Zone (8, 28) und der Auslass (15) der zweiten Austausch-Zone (9, 29) des besagten zumindest einen Wärmeaustausch-Mittels (7, 27) mit dem entsprechenden einen Ende (3, 4) des besagten Wärmemoduls (20) in Fluidverbindung stehen und dadurch, dass der Auslass (13) der ersten Austausch-Zone (8, 28) und der Einlass (14) der zweiten Austausch-Zone (9, 29) mit der besagten Antriebseinrichtung (16) in Fluidverbindung stehen, wobei die zumindest zwei magnetokalorischen Elemente von dem Wärmeübertragungsfluid in entgegen gesetzten Richtungen durchflossen werden, **dadurch gekennzeichnete**r Wärmegenerator, dass die besagte Antriebseinrichtung (16) folgende Elemente beträgt:
- ein mit der besagten gemeinsamen Zelle (19) in Fluidverbindung stehender Zentral-Antrieb (21), um das Wärmeübertragungsfluid durch diese gemeinsame Zelle hindurch in Richtung der magnetokalorischen Elemente oder in die entgegen gesetzte Richtung zu bewegen, und
- zwei End-Antriebe (22 und 23), die jeder mit einem der Enden (3 oder 4) des besagten Wärmemoduls (20) über das besagte zumindest eine Wärmeaustausch-Mittel (7, 27) in Fluidverbindung stehen,
und dadurch, dass der besagte Zentral-Antrieb (21) ausgelegt ist, um ein doppelt so großen Volumen Wärmeübertragungsfluid in Bewegung zu setzen, als die besagten End-Antriebe (22 und 23).

2. Wärmeerzeuger nach Anspruch 1, **dadurch gekennzeichnet, dass** der besagte Zentral-Antrieb (21) und die besagten End-Antriebe (22, 23) durch eine gleiche Betätigungsvorrichtung angesteuerte Kolben betragen.

3. Verfahren zum Austausch der von einem Wärmeerzeuger (10) nach einem beliebigen der vorhergehenden Ansprüche erzeugten Wärmeenergie mit zumindest einer externen Vorrichtung über zumindest ein Wärmeaustausch-Mittel (7, 27), wobei der besagte Wärmeerzeuger (10) zumindest ein mit zwei Enden (3, 4) versehenes und von einem Wärmeübertragungsfluid durchflossenes Wärmemodul (20) aufweist und zumindest ein magnetokalorisches Element (5) beträgt, das einem variablem Magnetfeld ausgesetzt ist um es aufeinander folgenden Heiz- und Kühl-Zyklen zu unterziehen, wobei das besagte Wärmeübertragungsfluid abwechselnd und synchron mit der Variation des Magnetfelds von einer Antriebseinrichtung (16) für das Wärmeübertragungsfluid durch jedes magnetokalorische Element (5) in Richtung des einen oder des anderen der besagten Enden (3, 4) hindurch bewegt wird, **dadurch gekennzeichnete**s Verfahren, dass man das Wärmeübertragungsfluid Schritt für Schritt, bei jeder Betriebsphase, in dem besagten magnetokalorischen Element (5) bewegt mit Hilfe der besagten Antriebseinrichtung (16), die in einem geschlossenen Fluidkreis mit konstantem Volumen mit dem zumindest einem Wärmeaustausch-Mittel (7, 27) verbunden ist, und dadurch, dass man die bei jeder Betriebsphase des besagten Wärmeerzeugers erzeugten und bei jedem magnetokalorischen Zyklus bestehend aus einer Erwärmungs- und einer Abkühlungs-Phase von dem besagten Wärmeübertragungsfluid transportierten Wärmeenergie in zwei aufeinander folgenden Austausch-Zonen (8, 9 und 28, 29) des besagten zumindest einem Wärmeaustausch-Mittels (7, 27) austauscht.

## Claims

1. Magnetocaloric heat generator (10), comprising at least one thermal module (20) having one cold end (3) and one hot end (4), and comprising at least two magnetocaloric elements (5), a magnetic arrangement intended to subject said magnetocaloric elements (5) to a variable magnetic field, creating alternately in each said magnetocaloric elements (5) a heating phase and a cooling phase, a means for driving (16) a heat transfer fluid in thermal contact with said magnetocaloric elements (5) and circulating alternately towards the one (3) of the ends, and then towards the other (4) and vice-versa, in synchronisation with the variation of the magnetic field, and at least one heat exchange means (7, 27) to transfer of the thermal energy produced by said thermal module (20) to at least one device external to said heat generator (10), said heat transfer fluid driving means (16) being in fluidic communication, in a closed constant-volume fluidic circuit, to the cold end (3) and to the hot end (4) of said thermal module (20) through said exchange means (7, 27) and said heat exchange means (7, 27) comprising two exchange areas (8 and 9, 28 and 29) distinct from each other, connected in parallel, and equipped with control means (11) for the direction of circulation of the heat transfer fluid, so that each of them is crossed alternately in only one direction of circulation, said at least two magnetocaloric elements (5) being in fluidic connection through a common cell (19) and each being subjected to a different heating or cooling phase, heat generator in which the inlet (12) of the first exchange area (8, 28) and the outlet (15) of the second exchange area (9, 29) of said thermal exchange means (7, 27) are put in fluidic communication with one of the corresponding ends (3, 4) of said thermal module (20) and the outlet (13) of the first exchange area (8, 28) and the inlet (14) of the second exchange area (9, 29) are put in fluidic communication with said driving means (16), said at least two magnetocaloric elements being crossed by the heat transfer fluid in opposite directions, heat generator **characterized in that** said driving means (16) includes:
- one central actuator (21) in fluidic connection with said common cell (19) to move the heat transfer fluid through this common cell, toward the magnetocaloric elements or in the opposite direction, and
- two end actuators (22 and 23) each in fluidic connection with one of the ends (3 or 4) of said thermal module (20) through said at least one said thermal exchange means (7, 27),
and **in that** said central actuator (21) is designed to move a volume of heat transfer fluid that is the double of that end actuators (22 and 23).

2. Heat generator according to claim 1, **characterized in that** said central actuator (21) and said end actuators (22, 23) comprise pistons that are controlled by a same control device.

3. Process for the exchange of the thermal energy produced by a heat generator (10) according to any of the previous claims, with at least one external device through at least one heat exchange means (7, 27), said heat generator (10) comprising at least one thermal module (20) provided with two ends (3, 4), through which a heat transfer fluid flows, and comprising at least one magnetocaloric element (5) subjected to a variable magnetic field that leads to successive heating and cooling phases in it, said heat transfer fluid circulating through every magnetocaloric element (5) alternately and in synchronisation with the variation of the magnetic field towards one or the other of said ends (3, 4), and vice-versa, by means of a heat transfer fluid driving means (16), process **characterised in that** the heat transfer fluid is moved step by step in said magnetocaloric element (5), at every operating phase, by a driving means (16) connected to heat exchange means (7, 27) in a closed constant-volume fluidic circuit, and **in that** one exchanges the thermal energy produced by said heat generator at every operating phase and transported by said heat transfer fluid at every magnetocaloric cycle comprising a heating phase and a cooling phase in two successive exchange areas (8, 9 and 28, 29) of each thermal exchange means (7, 27).
